(19) Europäisches Patentamt
European Patent Office
Office européen des brevets

(11) EP 3 476 892 B1

(12) EUROPEAN PATENT SPECIFICATION

(45) Date of publication and mention of the grant of the patent:
**03.12.2025 Bulletin 2025/49**

(21) Application number: **18194435.6**

(22) Date of filing: **14.09.2018**

(51) International Patent Classification (IPC):
***C08L 7/00*** *(2006.01)* ***C08K 5/101*** *(2006.01)*
***C08L 9/00*** *(2006.01)* ***C08L 21/00*** *(2006.01)*
***B60C 1/00*** *(2006.01)* ***C08K 3/04*** *(2006.01)*
***C08K 3/36*** *(2006.01)*

(52) Cooperative Patent Classification (CPC):
(C-Sets available)
**C08L 9/00; B60C 1/00; B60C 1/0016; C08K 3/04; C08K 3/30; C08K 3/36; C08K 5/1345; C08K 5/18; C08L 7/00; C08L 21/00;** B60C 2001/005 (Cont.)

(54) **RUBBER COMPOSITION AND PNEUMATIC TIRE**

KAUTSCHUKZUSAMMENSETZUNG UND LUFTREIFEN

COMPOSITION DE CAOUTCHOUC ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2017 JP 2017208281**

(43) Date of publication of application:
**01.05.2019 Bulletin 2019/18**

(73) Proprietor: **Sumitomo Rubber Industries, Ltd.**
**Kobe-shi, Hyogo 651-0072 (JP)**

(72) Inventor: **MIYAZAKI, Tatsuya**
**Kobe-shi,, Hyogo 651-0072 (JP)**

(74) Representative: **TBK**
**Bavariaring 4-6**
**80336 München (DE)**

(56) References cited:
**EP-A1- 2 740 757 DE-A1- 102015 210 422**

- **DATABASE WPI Week 201254, Derwent World Patents Index; AN 2012-K33162, XP002786927**
- **DATABASE WPI Week 201254, Derwent World Patents Index; AN 2012-K33164, XP002786928**
- **DATABASE WPI Week 201244, Derwent World Patents Index; AN 2012-H51987, XP002786929**
- **M PATEL AND S N NAIK: "Gamma-Oryzanol from Rice Bran Oil- A Review", JOURNAL OF SCIENTIFIC & INDUSTRIAL RESEARCH, vol. 63, July 2004 (2004-07-01), pages 569 - 578, XP002786930**
- **ZHIMIN XU AND J. SAMUEL GODBER: "Purification and Identification of Components of Gamma-Oryzanol in Rice Bran Oil", J. AGRIC. FOOD CHEM., vol. 47, 6 September 1999 (1999-09-06), USA, pages 2724 - 2728, XP002786931, DOI: 10.1021/jf981175j**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/04, C08L 7/00;**
**C08K 3/30, C08L 7/00;**
**C08K 5/1345, C08L 7/00;**
**C08K 5/18, C08L 7/00**

## Description

BACKGROUND OF THE INVENTION

Field of the Invention

The present invention relates to a rubber composition and a pneumatic tire.

Description of the Background Art

In a rubber composition containing a diene-based rubber, sulfur such as powdery sulfur and insoluble sulfur is normally used in addition to a vulcanization accelerator, zinc oxide, and a fatty acid. In order to further improve abrasion resistance and tensile performance, a hybrid crosslinking agent such as PERKALINK 900 (1,3-bis(citraconimidomethyl) benzene) manufactured by Flexsys and TACKIROL V200 (an alkylphenol sulfur chloride condensate) manufactured by Taoka Chemical Co., Ltd. may be used in combination with sulfur.

Furthermore, instead of sulfur, a sulfur-containing compound such as powder containing sulfur and a liquid compound containing sulfur, for example, Vulcuren VP KA9188 (1,6-bis(N,N'-dibenzylthiocarbamoyldithio)hexane) manufactured by LANXESS or 2OS4 (poly-3,6-dioxaoctane-tetrasulfide) manufactured by Kawaguchi Chemical Industry Co., LTD., may also be used (see, for example, Japanese Laid-Open Patent Publication No. 2012-111888).

As a result of a thorough study, the present inventor has understood that, if sulfur and/or a sulfur-containing compound is blended, sulfur atoms generate radicals in kneading a rubber composition, so that a polymer is broken and compatibility between a filler and the polymer and processability of the base material are improved, but abrasion resistance and tensile performance are decreased in some cases.

In the tensile performance, tensile performance at 100°C influences a cut lip property and durability in a high-temperature environment or when a tire generates heat.

An object of the present invention is to provide a rubber composition capable of improving abrasion resistance and tensile performance in a balanced manner and a pneumatic tire using the rubber composition.

JP 2012 149133 A describes a rubber composition for tires containing rice oil in which the content of oleic acid in 100 mass% of the constituent fatty acids of the rice oil is ≥48 mass%.

JP 2012 149132 A describes a rubber composition for tires which is obtained by a production method including a first base kneading step of kneading a rubber component and a silica, and a second base kneading step of kneading a kneaded product obtained by the first base kneading step, silica and rice oil, wherein the content of oleic acid in 100 mass% of the constituent fatty acids of the rice oil is ≥48 mass%.

JP 2012 122016 A describes a rubber composition for tire containing a modified natural rubber whose phosphorus content is 200 ppm or less and rice oil.

EP 2 740 757 A1 describes a rubber composition for tires containing a diene rubber, silica having a BET specific surface area of 170 to 270 $m^2/g$, sulfur, and a liquid resin having a softening point of -20 to 45°C, wherein the amount of the liquid resin is 0.5 to 20 parts by mass, and the amount of the silica is 40 to 120 parts by mass, each per 100 parts by mass of the rubber component of the rubber composition.

SUMMARY OF THE INVENTION

As a result of a thorough study, the present inventor has found that, although a rubber composition contains a p-phenylenediamine-based antioxidant such as N-(1,3-dimethylbutyl)-N'-phenyl-p-phenylenediamine as an antioxidant, breakage of a polymer cannot be inhibited only by the p-phenylenediamine-based antioxidant.

As a result of a search for a component effective for breakage of a polymer, the present inventor has found that breakage of a polymer can be inhibited by a ferulic acid ester compound, and has accomplished the present invention.

Specifically, the present invention is directed to a rubber composition as defined in claim 1.

An amount of the ferulic acid ester compound per 100 parts by mass of the rubber component is preferably 0.01 to 1.0 parts by mass.

The rubber composition preferably contains a p-phenylenediamine-based antioxidant.

The rubber composition preferably contains a rosin ester resin.

The rubber composition is preferably a rubber composition for a tire.

The present invention is also directed to a pneumatic tire including a tire member produced using the rubber composition.

According to the present invention, since the rubber composition includes a rubber component, carbon black and/or silica, sulfur and/or a sulfur-containing compound, and a ferulic acid ester compound and an amount of the ferulic acid ester compound per 100 parts by mass of the rubber component is 0.01 to 10 parts by mass, abrasion resistance and

tensile performance can be improved in a balanced manner.

DESCRIPTION OF THE PREFERRED EMBODIMENTS

The rubber composition of the present invention contains a rubber component, carbon black and/or silica, sulfur and/or a sulfur-containing compound, and a ferulic acid ester compound, and an amount of the ferulic acid ester compound per 100 parts by mass of the rubber component is 0.01 to 10 parts by mass.

The reason why abrasion resistance and tensile performance can be improved in a balanced manner by blending the ferulic acid ester compound is not necessarily clear but is inferred as described below.

As described above, sulfur and/or a sulfur-containing compound generates free radicals that break a polymer in a process of being kneaded into a polymer. Thus, in the case where any of polymers such as isobutylene-isoprene-rubber, SBR, and NR is used, abrasion resistance and tensile performance deteriorate.

On the other hand, in the case where a ferulic acid ester compound is blended, double bonds in an aromatic ring and a side chain derived from ferulic acid (a compound represented by the formula below) is inferred to resonate to absorb radicals and thus be able to inhibit breakage of the polymer, so that favorable tensile performance is achieved. In addition, since breakage of the polymer can be inhibited, the molecular weight of the polymer is inferred to be maintained high, so that favorable abrasion resistance is achieved. This is also supported by the fact that, in the case where a ferulic acid ester compound is blended, the viscosity is high and abrasion resistance and tensile performance can be improved in a balanced manner.

Moreover, whereas a p-phenylenediamine-based antioxidant or the like, which is conventionally blended as an antioxidant in a rubber composition, exerts its effect at normal temperature to approximately 80°C, a ferulic acid ester compound can suitably inhibit breakage of a polymer in a higher temperature range of 100 to 200°C or higher and thus is inferred to be able to improve abrasion resistance and tensile performance in a balanced manner. In the present specification, when tensile performance is merely described, the tensile performance means both: "tensile performance (normal temperature)" that is tensile performance at normal temperature; and "tensile performance (100°C)" that is tensile performance at 100°C.

[Chem. 1]

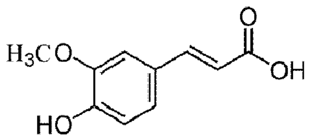

The above rubber composition contains a ferulic acid ester compound.

The ferulic acid ester compound is not particularly limited as long as the ferulic acid ester compound is an ester compound of ferulic acid and an alcohol. γ-oryzanol is preferable for the reason that the effects are more suitably achieved.

In the present specification, γ-oryzanol refers to an ester compound in which a sterol forms an ester bond with ferulic acid.

γ-oryzanol is a component specific to rice bran oil and rice embryo oil. For example, commercially-available rice oil contains 0.2 to 0.5% by mass of γ-oryzanol. Normally, γ-oryzanol is not chemically synthesized, but is extracted and purified from rice bran oil or rice embryo oil. For example, γ-oryzanol is extracted and purified from the seed coat (chaff) of Gramineae rice (*Oryza sativa Linne*). Thus, naturally-derived γ-oryzanol is not a single substance but a mixture of ester compounds in which several types of sterols form ester bonds with ferulic acid.

The sterols bound to ferulic acid are not particularly limited but are preferably phytosterol. As the sterols bound to ferulic acid in naturally-derived γ-oryzanol, sterols having 25 to 35 carbon atoms (preferably 27 to 33 carbon atoms) such as cycloartenol (number of carbon atoms: 30), 24-methylenecycloartanol (number of carbon atoms: 31), campesterol (number of carbon atoms: 28), β-sitosterol (number of carbon atoms: 29), and cyclobranol (number of carbon atoms: 31), are known.

Examples of γ-oryzanol include cycloartenol ferulic acid ester, 24-methylenecycloartanol ferulic acid ester, campesterol ferulic acid ester, β-sitosterol ferulic acid ester, and cyclobranol ferulic acid ester. Commercially-available γ-oryzanol is normally a mixture of cycloartenol ferulic acid ester, 24-methylenecycloartanol ferulic acid ester, campesterol ferulic acid ester, β-sitosterol ferulic acid ester, and cyclobranol ferulic acid ester. Among them, cycloartenol ferulic acid ester is preferable.

As the ferulic acid ester compound (γ-oryzanol), for example, products manufactured by Oryza Oil & Fat Chemical Co., Ltd., TSUNO FOOD INDUSTRIAL CO., LTD., etc., can be used.

The amount of the ferulic acid ester compound (γ-oryzanol) per 100 parts by mass of the rubber component is not less than 0.01 parts by mass, preferably not less than 0.02 parts by mass, more preferably not less than 0.05 parts by mass,

further preferably not less than 0.07 parts by mass, and particularly preferably not less than 0.08 parts by mass. When this amount is not less than 0.01 parts by mass (in particular, not less than 0.07 parts by mass), abrasion resistance and tensile performance can be improved in a balanced manner while favorable processability is maintained. In addition, this amount is not greater than 10.0 parts by mass, preferably not greater than 7.00 parts by mass, more preferably not greater than 5.00 parts by mass, further preferably not greater than 3.00 parts by mass, particularly preferably not greater than 1.00 part by mass, and most preferably not greater than 0.70 parts by mass. When this amount is not greater than 10.0 parts by mass, abrasion resistance and tensile performance can be improved in a balanced manner while favorable processability is maintained.

As described above, commercially-available rice oil contains 0.2 to 0.5% by mass of γ-oryzanol. However, since the amount of γ-oryzanol contained in rice oil is small, in the case of blending γ-oryzanol in a desired amount, the blending amount of rice oil becomes large, and thus abrasion resistance may deteriorate compared to the case where a petroleum process oil, which is preferably used in a tire rubber composition, is used. Therefore, in the rubber composition, the amount of rice oil per 100 parts by mass of the rubber component is 0 parts by mass (rice oil is not substantially contained).

Examples of the rubber component that can be used in the rubber composition include isoprene-based rubbers and diene-based rubbers such as styrene-butadiene rubber (SBR), butadiene rubber (BR), acrylonitrile-butadiene rubber (NBR), chloroprene rubber (CR), isobutylene-isoprene-rubber (IIR), and styrene-isoprene-butadiene copolymer rubber (SIBR). These rubbers may be used individually, or two or more of these rubbers may be used in combination. The ferulic acid ester compound has a polymer breakage inhibition effect for any diene-based rubber, and thus the rubber component is not particularly limited, but SBR, BR, and isoprene-based rubbers are preferable. In the case where the rubber composition is used for treads of tires for a truck or a bus, isoprene-based rubbers are preferable, and BR may be used in combination with an isoprene-based rubber. In the case where the rubber composition is used for treads of tires for a passenger car, SBR and BR are preferable, and SBR and BR are more preferably used in combination. In the case where the rubber composition is used for clinches, BR and isoprene-based rubbers are preferable, and BR and an isoprene-based rubber are more preferably used in combination.

The SBR is not particularly limited, and examples thereof include emulsion-polymerized styrene-butadiene rubber (E-SBR) and solution-polymerized styrene-butadiene rubber (S-SBR). These rubbers may be used individually, or two or more types of these rubbers may be used in combination.

The styrene content of the SBR is preferably not less than 5% by mass, more preferably not less than 10% by mass, and further preferably not less than 15% by mass. In addition, this styrene content is preferably not greater than 50% by mass, more preferably not greater than 40% by mass, and further preferably not greater than 30% by mass. When this styrene content is in the above range, the effects tend to be favorably achieved.

In the present specification, the styrene content of the SBR is calculated by $H^1$-NMR measurement.

The weight-average molecular weight (Mw) of the SBR is preferably not less than 100 thousand and more preferably not less than 200 thousand. In addition, this Mw is preferably not greater than 1.6 million, more preferably not greater than 1.5 million, and further preferably not greater than 1.4 million. When this Mw is in the above range, the effects tend to be favorably achieved.

In the present specification, the weight-average molecular weight (Mw) and the number-average molecular weight (Mn) of the rubber component can be obtained by conversion, based on polystyrene standard, of a value measured by gel permeation chromatography (GPC) (GPC-8000 series manufactured by Tosoh Corporation, detector: differential refractometer, column: TSKGEL SUPERMALTPORE HZ-M manufactured by Tosoh Corporation).

Moreover, the SBR may be unmodified SBR or may be modified SBR. These rubbers may be used individually, or two or more types of these rubbers may be used in combination. The modified SBR only needs to be SBR having a functional group that interacts with a filler such as silica, and examples of such modified SBR include end-modified SBR obtained by modifying at least one end of SBR with a compound (modifier) having the functional group (end-modified SBR having the functional group at an end thereof), main chain-modified SBR having the functional group in the main chain thereof, main chain/end-modified SBR having the functional group in the main chain and at an end thereof (for example, main chain/end-modified SBR that has the functional group in the main chain thereof and in which at least one end thereof is modified with the modifier), and end-modified SBR that is modified (coupled) by using a multifunctional compound having two or more epoxy groups in the molecule thereof and to which a hydroxyl group or an epoxy group is introduced. These rubbers may be used individually, or two or more of these rubbers may be used in combination.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imido group, a hydrazo group, an azo group, a diazo group, a carboxyl group, a nitrile group, a pyridyl group, an alkoxy group, a hydroxyl group, an oxy group, and an epoxy group. These functional groups may have a substituent. Among them, for the reason that the effects are more suitably achieved, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), and an alkoxysilyl group (preferably, an alkoxysilyl

group having 1 to 6 carbon atoms) are preferable.

As the SBR, for example, products manufactured by and available from Sumitomo Chemical Co., Ltd., JSR Corporation, Asahi Kasei Corporation, Zeon Corporation, etc., can be used.

The BR is not particularly limited, and examples thereof include BR having a high cis content, BR containing syndiotactic polybutadiene crystal, and butadiene rubber synthesized by using a rare earth element catalyst (rare earth BR). These rubbers may be used individually, or two or more of these rubbers may be used in combination. Among them, rare earth BR is preferable.

The BR may be unmodified BR or may be modified BR. These rubbers may be used individually, or two or more types of these rubbers may be used in combination.

Examples of the modified BR include modified BR in which functional groups that are the same as in the above-described modified SBR are introduced.

The rare earth BR is a butadiene rubber synthesized by using a rare earth element catalyst, and has characteristics of having a high cis content and a low vinyl content. As the rare earth BR, a general-purpose product used for manufacturing tires can be used.

As the rare earth element catalyst, a known one can be used, and examples thereof include a catalyst containing a lanthanum series rare earth element compound, an organoaluminium compound, an aluminoxane, or a halogen-containing compound and optionally containing a Lewis base. Among them, an Nd catalyst using a neodymium (Nd)-containing compound as a lanthanum series rare earth element compound is particularly preferable.

Examples of the lanthanum series rare earth element compound include halides, carboxylates, alcoholates, thioalcoholates, amides, and the like of rare earth metals having an atomic number of 57 to 71. Among them, as described above, an Nd catalyst is preferably used since BR having a high cis content and a low vinyl content is obtained.

As the organoaluminium compound, a compound represented by $AlR^aR^bR^c$ (wherein $R^a$, $R^b$, and $R^c$ are the same or different from each other and each represent hydrogen or a hydrocarbon group having 1 to 8 carbon atoms) can be used. Examples of the aluminoxane include chain aluminoxanes and cyclic aluminoxanes. Examples of the halogen-containing compound include: halogenated aluminum represented by $AlX_kR^d_{3-k}$ (wherein X represents a halogen, $R^d$ represents an alkyl group, aryl group, or aralkyl group having 1 to 20 carbon atoms, and k represents 1, 1.5, 2, or 3); strontium halides such as $Me_3SrCl$, $Me_2SrCl_2$, $MeSrHCl_2$, and $MeSrCl_3$; and metallic halides such as silicon tetrachloride, tin tetrachloride, and titanium tetrachloride. The Lewis base is used for complexation of the lanthanum series rare earth element compound, and acetylacetone, ketone, an alcohol, etc., are used suitably.

In polymerizing butadiene, the above rare earth element catalyst may be used in a state of being dissolved in an organic solvent (n-hexane, cyclohexane, n-heptane, toluene, xylene, benzene, etc.), or may be used in a state of being carried on an appropriate carrier such as silica, magnesia, and magnesium chloride. As for the polymerization conditions, any of solution polymerization and bulk polymerization may be employed, a preferable polymerization temperature is -30 to 150°C, and the polymerization pressure may be arbitrarily selected depending on the other conditions.

The ratio (Mw/Mn) of the weight-average molecular weight (Mw) and the number-average molecular weight (Mn) of the above rare earth BR is preferably not less than 1.2 and more preferably not less than 1.5. When the Mw/Mn is set to be not less than the lower limit, favorable processability tends to be achieved. The Mw/Mn is preferably not greater than 5, more preferably not greater than 4, further preferably not greater than 3, particularly preferably not greater than 2, and most preferably not greater than 1.9. When the Mw/Mn is set to be not greater than the upper limit, favorable abrasion resistance tends to be achieved.

The Mw of the rare earth BR is preferably not less than 200 thousand and more preferably not less than 250 thousand, and is preferably not greater than 900 thousand and more preferably not greater than 600 thousand. Furthermore, the Mn of the rare earth BR is preferably not less than 100 thousand and more preferably not less than 150 thousand, and is preferably not greater than 800 thousand and more preferably not greater than 700 thousand. When the Mw and the Mn are set to be not less than the lower limits, favorable abrasion resistance tends to be achieved. When the Mw and the Mn are set to be not greater than the upper limits, favorable processability tends to be achieved.

The cis content of the rare earth BR is preferably not less than 90% by mass, more preferably not less than 93% by mass, and further preferably not less than 95% by mass. When the cis content is set to be not less than the lower limit, favorable abrasion resistance tends to be achieved.

In the present specification, the cis content of the rubber component can be measured by infrared absorption spectrometry.

The vinyl content of the rare earth BR is preferably not greater than 1.8% by mass, more preferably not greater than 1.0% by mass, further preferably not greater than 0.5% by mass, and particularly preferably not greater than 0.3% by mass. When the vinyl content is set to be not greater than the upper limit, favorable abrasion resistance tends to be achieved. In the present specification, the vinyl content of the rubber component can be measured by infrared absorption spectrometry.

As the BR, products of Ube Industries, Ltd., JSR Corporation, Asahi Kasei Corporation, Zeon Corporation, etc., can be used.

Examples of isoprene-based rubbers include natural rubber (NR), isoprene rubber (IR), reformed NR, modified NR, and modified IR. As the NR, NRs that are generally used in the tire industry, such as SIR20, RSS#3, and TSR20, can be used. The IR is not particularly limited, and, for example, IRs that are generally used in the tire industry, such as IR2200, can be used. Examples of reformed NR include deproteinized natural rubber (DPNR) and ultra pure natural rubber (UPNR), examples of modified NR include epoxidized natural rubber (ENR), hydrogenated natural rubber (HNR), and grafted natural rubber, and examples of modified IR include epoxidized isoprene rubber, hydrogenated isoprene rubber, and grafted isoprene rubber. These rubbers may be used individually, or two or more of these rubbers may be used in combination.

The amounts of the SBR, the BR, and the isoprene-based rubber may be adjusted as appropriate according to use.

In the case where the rubber composition is used for treads of tires for a truck or a bus, the amount of each rubber component is preferably as follows. Accordingly, the effects are more suitably achieved.

The amount of the isoprene-based rubber in 100% by mass of the rubber component is preferably not less than 10% by mass, more preferably not less than 30% by mass, further preferably not less than 60% by mass, and particularly preferably not less than 70% by mass, and may be 100% by mass.

Meanwhile, in the case where the BR is used in combination with the isoprene-based rubber, the upper limit of the amount of the isoprene-based rubber in 100% by mass of the rubber component is preferably 90% by mass. In addition, the amount of the BR in 100% by mass of the rubber component is preferably not less than 5% by mass and more preferably not less than 10% by mass, and is preferably not greater than 40% by mass and more preferably not greater than 30% by mass.

In the case where the rubber composition is used for treads of tires for a passenger car, the amount of each rubber component is preferably as follows. Accordingly, the effects are more suitably achieved.

The amount of the SBR in 100% by mass of the rubber component is preferably not less than 10% by mass, more preferably not less than 30% by mass, further preferably not less than 60% by mass, and particularly preferably not less than 70% by mass. The upper limit of the amount of the SBR may be 100% by mass in the case of being aimed at high grip performance, but the amount of the SBR is preferably not greater than 95% by mass and more preferably not greater than 90% by mass.

From the viewpoint of achieving excellent abrasion resistance, the amount of the BR in 100% by mass of the rubber component is preferably not less than 5% by mass, more preferably not less than 10% by mass, and further preferably not less than 20% by mass. From the viewpoint of achieving excellent grip performance, the amount of the BR is preferably not greater than 90% by mass, more preferably not greater than 70% by mass, further preferably not greater than 40% by mass, and particularly preferably not greater than 30% by mass.

In the case where the rubber composition is used for clinches, the isoprene-based rubber and the BR are mainly used, and the amount of each rubber component is preferably as follows. Accordingly, the effects are more suitably achieved.

From the viewpoint of achieving excellent tensile performance, the amount of the isoprene-based rubber in 100% by mass of the rubber component is preferably not less than 10% by mass, more preferably not less than 20% by mass, and further preferably not less than 30% by mass, and is preferably not greater than 80% by mass, more preferably not greater than 70% by mass, further preferably not greater than 60% by mass, and particularly preferably not greater than 40% by mass.

From the viewpoint of achieving excellent abrasion resistance, the amount of the BR in 100% by mass of the rubber component is preferably not less than 10% by mass, more preferably not less than 30% by mass, further preferably not less than 50% by mass, particularly preferably not less than 60% by mass, and most preferably not less than 65% by mass, and is preferably not greater than 95% by mass, more preferably not greater than 90% by mass, further preferably not greater than 80% by mass, and particularly preferably not greater than 75% by mass.

The rubber composition contains carbon black and/or silica. Accordingly, the effects are suitably achieved. In the case where the rubber composition is used for treads of tires for a passenger car, silica is preferably blended for the reason that favorable low fuel consumption performance is achieved. Meanwhile, in the case where the rubber composition is used for clinches or for treads of tires for a truck or a bus, carbon black is preferably blended for the reason that favorable rubber strength, abrasion resistance, and tensile performance are achieved.

The carbon black is not particularly limited, but examples thereof include N134, N110, N220, N234, N219, N339, N330, N326, and N351. These carbon blacks may be used individually, or two or more of these carbon blacks may be used in combination.

In the case where the rubber composition is used for treads, the nitrogen adsorption specific surface area ($N_2SA$) of the carbon black is preferably not less than 70 $m^2/g$, more preferably not less than 80 $m^2/g$, and further preferably not less than 100 $m^2/g$. When the $N_2SA$ is not less than 70 $m^2/g$, reinforcement is improved, and sufficient abrasion resistance tends to be achieved. In addition, the $N_2SA$ is preferably not greater than 300 $m^2/g$, more preferably not greater than 250 $m^2/g$, further preferably not greater than 200 $m^2/g$, and particularly preferably not greater than 150 $m^2/g$. When the $N_2SA$ is

not greater than 300 $m^2/g$, favorable dispersion of the carbon black is easily achieved, and the effects tend to be favorably achieved.

The nitrogen adsorption specific surface area of the carbon black is obtained according to JIS K 6217-2: 2001.

In the case where the rubber composition is used for clinches, the nitrogen adsorption specific surface area ($N_2SA$) of the carbon black is preferably not less than 40 $m^2/g$, more preferably not less than 50 $m^2/g$, and further preferably not less than 60 $m^2/g$. When the $N_2SA$ is not less than 40 $m^2/g$, reinforcement is improved, and sufficient abrasion resistance tends to be achieved. In addition, the $N_2SA$ is preferably not greater than 200 $m^2/g$, more preferably not greater than 150 $m^2/g$, further preferably not greater than 130 $m^2/g$, and particularly preferably not greater than 100 $m^2/g$. When the $N_2SA$ is not greater than 200 $m^2/g$, favorable dispersion of the carbon black is easily achieved, and the effects tend to be favorably achieved.

As the carbon black, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., etc., can be used.

The amount of the carbon black per 100 parts by mass of the rubber component is preferably not less than 2 parts by mass and more preferably not less than 3 parts by mass. When this amount is not less than 2 parts by mass, sufficient ultraviolet cracking resistance and reinforcement can be achieved, and favorable abrasion resistance tends to be achieved. In addition, this amount is preferably not greater than 150 parts by mass, more preferably not greater than 120 parts by mass, and further preferably not greater than 80 parts by mass. When this amount is not greater than 150 parts by mass, the carbon black can be favorably dispersed, and favorable abrasion resistance tends to be achieved.

In the case where the rubber composition is used for clinches or for treads of tires for a truck or a bus, the lower limit of the amount of the carbon black is further preferably 20 parts by mass, particularly preferably 30 parts by mass, most preferably 40 parts by mass, and even most preferably 50 parts by mass. Meanwhile, in the case where the rubber composition is used for treads of tires for a passenger car, the upper limit of the amount of the carbon black is particularly preferably 80 parts by mass, most preferably 70 parts by mass, even most preferably 60 parts by mass, further most preferably 40 parts by mass, particularly most preferably 20 parts by mass, and even further most preferably 10 parts by mass.

The type of silica is not particularly limited, and examples of the silica include dry-process silica (silicic anhydride) and wet-process silica (hydrous silicic acid), but wet-process silica is preferable for the reason that it has a higher silanol group content. These types of silica may be used individually, or two or more thereof may be used in combination.

The nitrogen adsorption specific surface area ($N_2SA$) of the silica is preferably not less than 70 $m^2/g$ and more preferably not less than 150 $m^2/g$. When the $N_2SA$ is set to be not less than 70 $m^2/g$, abrasion resistance tends to be improved. In addition, the $N_2SA$ is preferably not greater than 300 $m^2/g$ and more preferably not greater than 200 $m^2/g$. When the $N_2SA$ is set to be not greater than 300 $m^2/g$, processability tends to be improved. The nitrogen adsorption specific surface area of the silica is a value measured by the BET method according to ASTM D3037-81.

As the silica, for example, products of Degussa, Rhodia, Tosoh Silica Corporation, Solvay Japan, Ltd., Tokuyama Corporation, etc., can be used.

The amount of the silica per 100 parts by mass of the rubber component is preferably not less than 2 parts by mass, more preferably not less than 5 parts by mass, further preferably not less than 10 parts by mass, particularly preferably not less than 30 parts by mass, and most preferably not less than 60 parts by mass. When this amount is not less than 2 parts by mass, grip performance and low fuel consumption performance tend to be improved. In addition, this amount is preferably not greater than 150 parts by mass, more preferably not greater than 140 parts by mass, further preferably not greater than 130 parts by mass, and particularly preferably not greater than 100 parts by mass. When this amount is not greater than 150 parts by mass, the silica can be favorably dispersed, and favorable abrasion resistance tends to be achieved.

In the case where the rubber composition contains silica, the rubber composition preferably contains a silane coupling agent.

The silane coupling agent is not particularly limited, and examples thereof include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as $\gamma$-glycidoxypropyltriethoxysilane and $\gamma$-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. As commercially available products, products of Degussa, Momentive, Shin-Etsu Silicones,

Tokyo Chemical Industry Co., Ltd., AZmax, Dow Corning Toray Co., Ltd., etc., can be used. These silane coupling agents may be used individually, or two or more of these silane coupling agents may be used in combination. Among them, sulfide silane coupling agents are preferable from the viewpoint that the effects tend to be favorably achieved.

The amount of the silane coupling agent per 100 parts by mass of the silica is preferably not less than 3 parts by mass and more preferably not less than 5 parts by mass. When the amount is not less than 3 parts by mass, an effect caused by the addition tends to be achieved. In addition, the amount is preferably not greater than 20 parts by mass and more preferably not greater than 15 parts by mass. When the amount is not greater than 20 parts by mass, an effect corresponding to the blending amount is achieved, and favorable processability during kneading tends to be achieved.

The rubber composition contains sulfur and/or a sulfur-containing compound. Accordingly, the effects are suitably achieved.

Examples of the sulfur include powdery sulfur, precipitated sulfur, colloidal sulfur, insoluble sulfur, highly dispersible sulfur, and soluble sulfur, which are generally used in the rubber industry. These sulfurs may be used individually, or two or more of these sulfurs may be used in combination.

As the sulfur, for example, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used.

The sulfur-containing compound is not particularly limited as long as it is a compound that contains sulfur and can be used as a vulcanizing agent. Examples of the sulfur-containing compound include 1,2-bis(N,N'-dibenzylthiocarbamoyldithio)ethane, 1,3-bis(N,N'-dibenzylthiocarbamoyldithio)propane, 1,4-bis(N,N'-dibenzylthiocarbamoyldithio)butane, 1,5-bis(N,N'-dibenzylthiocarbamoyldithio)pentane, 1,6-bis(N,N'-dibenzylthiocarbamoyldithio)hexane, 1,7-bis(N,N'-dibenzylthiocarbamoyldithio)heptane, 1,8-bis(N,N'-dibenzylthiocarbamoyldithio)octane, 1,9-bis(N,N'-dibenzylthiocarbamoyldithio)nonane, 1,10-bis(N,N'-dibenzylthiocarbamoyldithio)decane, poly-3,6-dioxaoctane-tetrasulfide, and 1,6-hexamethylene-dithiosodium sulfate dihydrate. These compounds may be used individually, or two or more of these compounds may be used in combination.

As the sulfur-containing compound, for example, products of LANXESS, Kawaguchi Chemical Industry Co., LTD., etc., can be used.

The total amount of the sulfur and the sulfur-containing compound (preferably, the amount of the sulfur) per 100 parts by mass of the rubber component is preferably not less than 0.1 parts by mass and more preferably not less than 0.5 parts by mass. In addition, the amount is preferably not greater than 10 parts by mass, more preferably not greater than 5.0 parts by mass, and further preferably not greater than 3.0 parts by mass. When the amount is in the above range, the effects tend to be favorably achieved.

The rubber composition preferably contains a rosin ester resin.

In the case where a rosin ester resin is blended, the aromatic parts in the rosin ester resin are considered to absorb sulfur radicals generated in a process of dispersion into the polymer, to generate appropriate shear torque in the rubber, thereby promoting dispersion of the sulfur. In addition, the COOH groups in the rosin ester resin are considered to be bound to the sulfur, thereby promoting dispersion of the sulfur. Due to these, the sulfur can be uniformly dispersed while molecular breakage of the polymer is inhibited, and thus abrasion resistance is considered to be further improved. This effect is inferred to be synergistically caused by blending the rosin ester resin together with the ferulic acid ester compound, so that abrasion resistance and tensile performance can be improved in a balanced manner.

As the rosin ester resin, esterified products of rosins can be used, and examples of the rosins include: raw material rosins such as gum rosin, wood rosin, and tall oil rosin; disproportionated products of raw material rosins; stabilized rosins obtained by hydrogenating raw material rosins; and polymerized rosins. The main components of the rosins are resin acids such as abietic acid, palustric acid, neoabietic acid, pimaric acid, isopimaric acid, and dehydroabietic acid.

The rosin ester resin is produced by esterification reaction of the above rosin and a polyol (a polyhydric alcohol such as glycerol and pentaerythritol). The esterification reaction can be carried out by a known method, for example, by heating the rosin and the polyol to 200 to 300°C in an inert gas atmosphere and removing generated water from the system.

The acid value (mg KOH/g) of the rosin ester resin is preferably not less than 1 and more preferably not less than 5, and is preferably not greater than 100, more preferably not greater than 80, further preferably not greater than 50, and particularly preferably not greater than 30. When the acid value is in the above range, the effects are more suitably achieved.

In the present specification, the acid value is a value that is the number of milligrams representing the amount of potassium hydroxide required to neutralize the acid contained in 1 g of the resin and that is measured by potentiometric titration (JIS K0070).

The softening point of the rosin ester resin is preferably not lower than -20°C, more preferably not lower than 0°C, further preferably not lower than 40°C, and particularly preferably not lower than 60°C. The softening point of the rosin ester resin is preferably not higher than 180°C, more preferably not higher than 140°C, and further preferably not higher than 100°C. When the softening point is in the above range, the effects are more suitably achieved.

In the present specification, the softening point is a softening point that is measured with a ring and ball softening point measuring device according to JIS K6220: 2001 and that is a temperature at which a ball has descended.

The amount of the rosin ester resin per 100 parts by mass of the rubber component is preferably not less than 0.5 parts by mass and more preferably not less than 1 part by mass. The amount of the rosin ester resin is preferably not greater than 20 parts by mass, more preferably not greater than 10 parts by mass, and further preferably not greater than 5 parts by mass. When the amount is in the above range, the effects are more suitably achieved.

The rubber composition may contain a resin other than the rosin ester resin. The resin is not particularly limited as long as it is one generally used in the tire industry, and examples of the resin include rosin-based resins other than the rosin ester resin, coumarone-indene resins, α-methylstyrene-based resins, terpene-based resins, p-t-butylphenol acetylene resins, acrylic-based resins, C5 resins, and C9 resins. As commercially available products, products of Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., TOAGOSEI CO., LTD., etc., can be used. These resins may be used individually, or two or more of these resins may be used in combination.

The rubber composition preferably contains an antioxidant.

Examples of the antioxidant include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol antioxidants such as 2,6-di-t-butyl-4-methylphenol and styrenated phenol; and bis-, tris-, and poly-phenol antioxidants such as tetrakis-[methylene-3-(3',5'-di-t-butyl-4'-hydroxyphenyl)propionate] methane. These antioxidants may be used individually, or two or more of these antioxidants may be used in combination. Among them, p-phenylenediamine-based antioxidants and quinoline-based antioxidants are preferable, and p-phenylenediamine-based antioxidant is more preferable. By blending a p-phenylenediamine-based antioxidant together with the ferulic acid ester compound, a synergistic effect is caused, and abrasion resistance and tensile performance can be improved in a more balanced manner. This effect is significantly achieved by blending the isoprene-based rubber.

As the antioxidant, for example, products of Seiko Chemical Co., Ltd., Sumitomo Chemical Co., Ltd., Ouchi Shinko Chemical Industrial Co., Ltd., Flexsys, etc., can be used.

The amount of the antioxidant (preferably, a p-phenylenediamine-based antioxidant) per 100 parts by mass of the rubber component is preferably not less than 0.5 parts by mass and more preferably not less than 1 part by mass. In addition, the amount is preferably not greater than 10 parts by mass and more preferably not greater than 5 parts by mass. When the amount is in the above range, the effects are more suitably achieved.

The rubber composition preferably contains a wax.

The wax is not particularly limited, and examples thereof include: petroleum waxes such as paraffin wax and microcrystalline wax; natural waxes such as vegetable waxes and animal waxes; and synthesized waxes such as polymers of propylene, ethylene, and the like. These waxes may be used individually, or two or more of these waxes may be used in combination. Among them, petroleum waxes are preferable, and paraffin wax is more preferable.

As the wax, for example, products of Ouchi Shinko Chemical Industrial Co., Ltd., **NIPPON** SEIRO CO., LTD., Seiko Chemical Co., Ltd., etc. can be used.

From the viewpoint of the above performance balance, the amount of the wax per 100 parts by mass of the rubber component is preferably not less than 0.3 parts by mass and more preferably not less than 0.5 parts by mass, and is preferably not greater than 20 parts by mass and more preferably not greater than 10 parts by mass.

The rubber composition preferably contains a fatty acid as a vulcanization accelerator aid.

As the fatty acid, a conventionally known one can be used, and examples thereof include stearic acid, oleic acid, and palmitic acid. Stearic acid is preferable from the viewpoint that the effects tend to be favorably achieved.

As the fatty acid, products of NOF Corporation, Kao Corporation, Wako Pure Chemical Industries, Ltd., New Japan Chemical Co., Ltd., etc., can be used.

The amount of the fatty acid per 100 parts by mass of the rubber component is preferably not less than 0.5 parts by mass and more preferably not less than 1 part by mass. In addition, the amount is preferably not greater than 10 parts by mass and more preferably not greater than 5 parts by mass. When the amount is in the above numerical range, the effects are more suitably achieved.

The rubber composition may contain an oil, or may not contain an oil in the case of aiming for a high level of abrasion resistance.

Examples of the oil include process oils, vegetable fats and oils, and mixtures thereof. As the process oil, for example, paraffinic process oil, aromatic process oil, or naphthenic process oil can be used. Examples of the vegetable fats and oils include rice oil, castor oil, cotton seed oil, linseed oil, rapeseed oil, soybean oil, palm oil, coconut oil, peanut oil, rosin, pine oil, pine tar, tall oil, corn oil, safflower oil, sesame oil, olive oil, sunflower oil, palm kernel oil, camellia oil, jojoba oil, macadamia nut oil, and tung oil. As commercially available products, products of Idemitsu Kosan Co., Ltd., Sankyo Yuka

Kogyo K.K., JXTG Nippon Oil & Energy Corporation, Olisoy, H&R, Hokoku Corporation, Showa Shell Sekiyu K.K., FUJI KOSAN COMPANY, LTD., etc., can be used. These oils may be used individually, or two or more of these oils may be used in combination. Among them, aromatic process oil is preferable.

The amount of the oil per 100 parts by mass of the rubber component is preferably not less than 1 part by mass and more preferably not less than 5 parts by mass. In addition, the amount is preferably not greater than 50 parts by mass and more preferably not greater than 30 parts by mass. When the amount is in the above numerical range, the effects are more suitably achieved.

The rubber composition preferably contains zinc oxide as a vulcanization accelerator aid.

As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

The amount of the zinc oxide per 100 parts by mass of the rubber component is preferably not less than 0.5 parts by mass and more preferably not less than 1 part by mass. In addition, the amount is preferably not greater than 10 parts by mass and more preferably not greater than 5 parts by mass. When the amount is in the above numerical range, the effects tend to be more favorably achieved.

The rubber composition preferably contains a vulcanization accelerator.

Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination. Among them, for the reason that the effects are more suitably achieved, sulfenamide-based vulcanization accelerators and guanidine-based vulcanization accelerators are preferable.

The amount of the vulcanization accelerator per 100 parts by mass of the rubber component is preferably not less than 0.5 parts by mass, more preferably not less than 0.7 parts by mass, further preferably not less than 1 part by mass, and particularly preferably not less than 1.5 parts by mass. In addition, the amount is preferably not greater than 10 parts by mass and more preferably not greater than 7 parts by mass. When the amount is in the above numerical range, the effects are more suitably achieved.

In addition to the above-described components, additives that are generally used in the tire industry can be blended in the rubber composition, and examples thereof include fillers such as organic peroxides, calcium carbonate, talc, alumina, clay, aluminum hydroxide, magnesium sulfate, and rubber powder. Each of the amounts of these fillers per 100 parts by mass of the rubber component is preferably not less than 0.1 parts by mass and preferably not greater than 200 parts by mass.

For example, the rubber composition can be produced by a method in which the above respective components are kneaded using a rubber kneading device such as an open roll and a Banbury mixer and then vulcanization is performed.

As for the kneading conditions, in a base kneading step of kneading the additives other than a crosslinking agent (vulcanizing agent) and the vulcanization accelerator, the kneading temperature is normally 100 to 180°C and preferably 120 to 170°C. In a finish kneading step of kneading the vulcanizing agent and the vulcanization accelerator, the kneading temperature is normally not higher than 120°C and preferably 85 to 110°C. In addition, a composition obtained by kneading the vulcanizing agent and the vulcanization accelerator is normally subjected to vulcanization processing such as press vulcanization. The vulcanization temperature is normally 140 to 190°C and preferably 150 to 185°C.

The rubber composition can be used for tires, shoe sole rubbers, industrial belts, packings, anti-seismic rubbers, stoppers for chemicals, etc., and among these, can be suitably used for tires .

The rubber composition is suitably used for treads (cap treads) and clinches for which favorable abrasion resistance is required. However, the rubber composition has favorable tensile performance and thus may be used for tire members other than treads and clinches, for example, for sidewalls, base treads, under treads, bead apexes, breaker cushion rubbers, carcass cord covering rubbers, insulations, chafers, inner liners, etc., and side reinforcing layers of run flat tires.

A clinch is a rubber part for covering a part that is in contact with a rim present at a lower portion of a sidewall, and is also referred to as clinch apex or rubber chafer. Specifically, for example, a clinch is a member shown in FIG. 1, etc., of Japanese Laid-Open Patent Publication No. 2008-75066.

(Pneumatic Tire)

The pneumatic tire of the present invention is produced by a normal method using the above rubber composition. Specifically, an unvulcanized tire is formed by extruding a rubber composition obtained by blending the above components, in an unvulcanized state so as to correspond to the shape of each tire member such as a tread, and forming the extruded rubber composition together with other tire members on a tire forming machine by a general method. A tire is obtained by heating and pressurizing the unvulcanized tire in a vulcanizing machine.

The pneumatic tire can be suitably used as a tire for a passenger car, a tire for a large-sized passenger car, a tire for a large-sized SUV, a tire for a truck or a bus, a tire for racing, a studless tire (tire for winter), a tire for a two-wheeled automotive vehicle, a run flat tire, a tire for an airplane, a tire used for a mine, etc.

EXAMPLES

The present invention will be specifically described by means of examples, but the present invention is not limited to these examples.

Various chemicals used in examples and comparative examples are collectively described below.

NR: TSR20
SBR: NS616 (non-oil-extended SBR, styrene content: 20% by mass, vinyl content: 66% by mass, Tg: -23°C, Mw: 240 thousand) manufactured by Zeon Corporation
BR: CB25 (BR synthesized by using an Nd catalyst (Nd-BR), cis content: 97% by mass, vinyl content: 0.7% by mass, Mw/Mn: 1.78, Mw: 500 thousand, Mn: 280 thousand) manufactured by LANXESS
Carbon black 1 (N220): Show Black N220 (carbon black, $N_2SA$: 114 $m^2/g$) manufactured by Cabot Japan K.K.
Carbon black 2 (N330): Show Black N330 (carbon black, $N_2SA$: 79 $m^2/g$) manufactured by Cabot Japan K.K.
Silica: Ultrasil VN3 ($N_2SA$: 175 $m^2/g$) manufactured by Degussa
Silane coupling agent: Si75 (bis(3-triethoxysilylpropyl)disulfide) manufactured by Degussa
Rosin ester resin: HARIESTER TF (softening point: 80°C, acid value10 mg KOH/g) manufactured by Harima Chemicals Group, Inc.
Terpene styrene resin: YS Resin TO125 (aromatic modified terpene resin, softening point: 125°C, acid value: 0 mg KOH/g, Mw: 800, Tg: 64°C) manufactured by Yasuhara Chemical Co., Ltd.
$\alpha$-methylstyrene resin: Sylvatraxx 4401 ($\alpha$-methylstyrene-based resin (a copolymer of $\alpha$-methylstyrene and styrene), softening point: 85°C, acid value: 0 mg KOH/g, hydroxyl value: 0 mg KOH/g, Mw: 700, Tg: 43°C) manufactured by Arizona Chemical Company
C5 resin: MARUKAREZ T-100AS manufactured by Maruzen Petrochemical Co., Ltd.
Paraffin wax: OZOACE 0355 manufactured by NIPPON SEIRO CO., LTD.
Stearic acid: Tsubaki manufactured by NOF Corporation
AH-24: Diana Process AH-24 (aromatic process oil) manufactured by Idemitsu Kosan Co., Ltd.
Rice oil: rice oil (content of oleic acid in 100 % by mass of constituent fatty acid of rice oil: 41% by mass, content of palmitic acid in 100 % by mass of constituent fatty acid of rice oil: 17% by mass, content of linoleic acid in 100 % by mass of constituent fatty acid of rice oil: 37% by mass)
Zinc oxide: two types of zinc oxide manufactured by Mitsui Mining & Smelting Co., Ltd.
6PPD: ANTIGENE 6C (antioxidant, N-(1,3-dimethylbutyl)-N'-phenyl-p-phenylenediamine) manufactured by Sumitomo Chemical Co., Ltd.
TMQ: FLECTOL TMQ (2,2,4-trimethyl-1,2-dihydroquinoline polymer) manufactured by FLEXSYS
$\gamma$-oryzanol: $\gamma$-oryzanol ($\gamma$-oryzanol extracted and purified from the seed coat of Gramineae rice (*Oryza sativa Linne*) (content of cycloartenol ferulic acid ester: 98% by mass or higher)) manufactured by Oryza Oil & Fat Chemical Co., Ltd.
5% oil-containing powdery sulfur: HK-200-5 (powdery sulfur containing 5% by mass of oil) manufactured by Hosoi Chemical Industry Co., Ltd.
TBBS: Nocceler NS (vulcanization accelerator, N-tert-butyl-2-benzothiazolylsulfenamide) manufactured by Ouchi Shinko Chemical Industrial Co., Ltd.
DPG: Nocceler D (vulcanization accelerator, 1,3-diphenylguanidine) manufactured by Ouchi Shinko Chemical Industrial Co., Ltd.

(Examples and Comparative Examples)

In accordance with each of the blending formulas shown in Table 1, the chemicals other than the sulfur and the vulcanization accelerator were kneaded under a condition of a set temperature of 150°C for 5 minutes using a 1.7-L Banbury mixer manufactured by Kobe Steel, Ltd., to obtain a kneaded product. Next, the sulfur and the vulcanization

accelerator were added to the obtained kneaded product, and the mixture was kneaded under a condition of 100°C for 5 minutes using an open roll to obtain an unvulcanized rubber composition.

A vulcanized rubber composition was obtained by press-vulcanizing the obtained unvulcanized rubber composition under the vulcanization conditions described in Table 1.

The obtained unvulcanized rubber composition was formed into the shape of a tread and attached together with other tire members to produce an unvulcanized tire, and the unvulcanized tire was press-vulcanized under the vulcanization conditions described in Table 1, to obtain a test tire (size: 205/65R15 (a tire for a passenger car), 11R22.5 (a tire for a truck or a bus).

The following evaluations were made by using the obtained unvulcanized rubber compositions, vulcanized rubber compositions, and test pneumatic tires. The test results of the respective compositions and tires are shown in Table 1. Comparative Example 1-1 is defined as a reference comparative example in truck/bus 1, Comparative Example 2-1 is defined as a reference comparative example in truck/bus 2, Comparative Example 3-1 is defined as a reference comparative example in passenger car 1, Comparative Example 4-1 is defined as a reference comparative example in passenger car 2, and Comparative Example 5-1 is defined as a reference comparative example in clinch.

(Mooney Viscosity)

According to JIS K 6300-1 "Rubber, unvulcanized-Physical property-Part 1: Determination of Mooney viscosity and pre-vulcanization characteristics with Mooney viscometer", the Mooney viscosity ($ML_{1+4}$/130°C) of each of the above unvulcanized rubber compositions was measured, using a Mooney viscosity tester, at a point of time when 4 minutes had elapsed from start of rotation of a small rotor under a temperature condition of 130°C to which preheating was performed for 1 minute. Regarding the measurement results, the Mooney viscosity of each blending formula is indicated as an index with the result of the corresponding reference comparative example being set as 100. A higher index indicates that the viscosity is higher, breakage of a polymer can be inhibited, and favorable processability is exhibited.

(Elongation at Break)

According to JIS K 6251 "Rubber, vulcanized or thermoplastics-Determination of tensile stress-strain properties", a tensile test was carried out using a No. 3 dumbbell type test piece formed from each vulcanized rubber composition, and the elongation at break (tensile elongation; EB [%]) of the vulcanized rubber test piece was measured at normal temperature (23°C) and 100°C. The elongation at break is indicated as an index with the result of the corresponding reference comparative example being set as 100 (elongation-at-break index). A higher elongation-at-break index (normal temperature) indicates that the tensile performance (normal temperature) is better. A higher elongation-at-break index (100°C) indicates that the tensile performance (100°C) (tensile performance in a high-temperature environment) is better.

(Abrasion Resistance)

(Rubber Composition for Tread)

Each of the test tires was mounted to a vehicle, and the groove depth of the tread was measured after running for a distance of 8000 km. Then, the distance run when the groove depth decreased by 1 mm was calculated. The distance is indicated as an index by the following equation. A higher value indicates that the abrasion resistance is better.

(Abrasion resistance index) = (distance run when groove depth of each blending formula decreases by 1 mm) / (distance run when groove depth of reference comparative example decreases by 1 mm) × 100

(Rubber Composition for Clinch)

A Lamboum abrasion amount of each of the above vulcanized rubber sheets was measured using a Lamboum abrasion tester under conditions of a temperature of 20°C, a slip rate of 20%, and a test time of 2 minutes. Then, a volume loss amount was calculated from the measured Lamboum abrasion amount. The volume loss amount of each blending formula is indicated as an index by the following equation. A higher Lamboum abrasion index indicates that the abrasion resistance is better.

(Lamboum abrasion index) = (volume loss amount of reference comparative example) / (volume loss amount of each blending formula) × 100

(Combined Performance)

In Table 1, the sum of the elongation-at-break index (normal temperature), the elongation-at-break index (100°C), and the abrasion resistance index was evaluated as combined performance.

[Table 1]

| | | Member | Cap tread | | | | | | | | | |
|---|---|---|---|---|---|---|---|---|---|---|---|---|
| | | Tire type | Truck/bus 1 | | | | | | | | | |
| | | | Ex. | Ex. | Ex. | Ex. | Ex. | Comp. Ex. | Comp. Ex. | Comp. Ex. | Comp. Ex. | Comp. Ex. |
| | | | 1-1 | 1-2 | 1-3 | 1-4 | 1-5 | 1-1 | 1-2 | 1-3 | 1-4 | 1-5 |
| Blending amount (parts by mass) | Rubber component | NR | 100 | 100 | 100 | 100 | 100 | 100 | 100 | 100 | 100 | 100 |
| | | SBR | | | | | | | | | | |
| | | BR | | | | | | | | | | |
| | Filler | Carbon black 1 (N220) | 55 | 55 | 55 | 57 | 57 | 55 | 55 | 55 | 55 | 55 |
| | | Carbon black 2 (N330) | | | | | | | | | | |
| | | Silica | | | | | | | | | | |
| | | Silane coupling agent | | | | | | | | | | |
| | Resin | Rosin ester resin | | | | 2 | | | | | | |
| | | Terpene styrene resin | | | | | 2 | | | | | |
| | | α-methylstyrene resin | | | | | | | | | | |
| | | C5 resin | | | | | | | | | | |
| | Wax | Paraffin wax | 1.5 | 1.5 | 1.5 | 1.5 | 1.5 | 1.5 | 1.5 | 1.5 | 1.5 | 1.5 |
| | Commercial processing aid | Stearic acid | 4 | 4 | 4 | 4 | 4 | 4 | 4 | | 4 | 4 |
| | Process oil | AH-24 | | | | | | | | | | |
| | | Rice oil | | | | | | | | 4 | | |
| | Crosslinking activator | Zinc oxide | 3 | 3 | 3 | 3 | 3 | 3 | 3 | 3 | 3 | 3 |
| | Antioxidant | 6PPD | 2.5 | 2.5 | 2.5 | 2.5 | 2.5 | 2.5 | 2.5 | 2.5 | 4 | 2.5 |
| | | TMQ | | | | | | | | | | 1.0 |
| | | γ-oryzanol | 0.050 | 0.100 | 0.500 | 0.100 | 0.100 | | 0.009 | | | |
| | Vulcanizing agent | 5% oil-containing powdery sulfur | 1.00 | 1.00 | 1.00 | 1.00 | 1.00 | 1.00 | 1.00 | 1.00 | 1.00 | 1.00 |
| | Vulcanization accelerator | TBBS | 1.5 | 1.5 | 1.5 | 1.5 | 1.5 | 1.5 | 1.5 | 1.5 | 1.5 | 1.5 |
| | | DPG | | | | | | | | | | |
| Production conditions | | Hs control range | Hs=66±1 | | | | | | | | | |
| | | Vulcanization conditions | 150°C -30 min | | | | | | | | | |
| Performance evaluation | | Mooney viscosity | 101 | 102 | 102 | 107 | 101 | 100 | 100 | 97 | 100 | 98 |
| | | (1) Elongation at break (normal temperature) target ≥ 98 | 101 | 101 | 101 | 109 | 101 | 100 | 100 | 101 | 100 | 98 |
| | | (2) Elongation at break (100°C) target ≥ 100 | 101 | 102 | 101 | 110 | 101 | 100 | 100 | 100 | 100 | 99 |
| | | (3) Abrasion resistance target ≥ 101 | 101 | 106 | 106 | 110 | 106 | 100 | 100 | 98 | 99 | 98 |
| | | Combined performance (sum of (1) to (3)) | 303 | 309 | 308 | 329 | 308 | 300 | 300 | 299 | 299 | 295 |
| | | | | | | | | Reference | | | | |

[Table 1] Cont.

| | Member | Cap tread | | | | | | | | | |
|---|---|---|---|---|---|---|---|---|---|---|---|
| | Tire type | Truck/bus 2 | | Passenger car 1 | | | | | | Passenger car 2 | |
| | | Ex. | Comp. Ex. | Ex. | Ex. | Ex. | Ex. | Comp. Ex. | Comp. Ex. | Ex. | Comp. Ex. |
| | | 2-1 | 2-1 | 3-1 | 3-2 | 3-3 | 3-4 | 3-1 | 3-2 | 4-1 | 4-1 |
| Blending amount (parts by mass) | | | | | | | | | | | |
| Rubber component | NR | 80 | 80 | | | | | | | | |
| | SBR | | | 80 | 80 | 80 | 80 | 80 | 80 | 80 | 80 |
| | BR | 20 | 20 | 20 | 20 | 20 | 20 | 20 | 20 | 20 | 20 |
| Filler | Carbon black 1 (N220) | 55 | 55 | 5 | 5 | 5 | 5 | 5 | 5 | 5 | 5 |
| | Carbon black 2 (N330) | | | | | | | | | | |
| | Silica | | | 75 | 75 | 75 | 75 | 75 | 75 | 90 | 90 |
| | Silane coupling agent | | | 6 | 6 | 6 | 6 | 6 | 6 | 7.2 | 7.2 |
| Resin | Rosin ester resin | | | | 2 | | | | | | |
| | Terpene styrene resin | | | | | 2 | | | | | |
| | α-methylstyrene resin | | | | | | 2 | | | | |
| | C5 resin | | | | | | | | | | |
| Wax | Paraffin wax | 1.5 | 1.5 | 1.5 | 1.5 | 1.5 | 1.5 | 1.5 | 1.5 | 1.5 | 1.5 |
| Commercial processing aid | Stearic acid | 4 | 4 | 2 | 2 | 2 | 2 | 2 | 0 | 2 | 2 |
| Process oil | AH-24 | | | 20 | 18 | 18 | 18 | 20 | 18 | 20 | 20 |
| | Rice oil | | | | | | | | 4 | | |
| Crosslinking activator | Zinc oxide | 3 | 3 | 3 | 3 | 3 | 3 | 3 | 3 | 3 | 3 |
| Antioxidant | 6PPD | 2.5 | 2.5 | 2.5 | 2.5 | 2.5 | 2.5 | 2.5 | 2.5 | 2.5 | 2.5 |
| | TMQ | | | 1.0 | 1.0 | 1.0 | 1.0 | 1.0 | 1.0 | 1.0 | 1.0 |
| | γ-oryzanol | 0.100 | | 0.100 | 0.100 | 0.100 | 0.100 | | | 0.100 | |
| Vulcanizing agent | 5% oil-containing powdery sulfur | 1.00 | 1.00 | 1.50 | 1.50 | 1.50 | 1.50 | 1.50 | 1.50 | 1.50 | 1.50 |
| Vulcanization accelerator | TBBS | 1.5 | 1.5 | 1.5 | 1.5 | 1.5 | 1.5 | 1.5 | 1.5 | 1.5 | 1.5 |
| | DPG | | | 2 | 2 | 2 | 2 | 2 | 2 | 2 | 2 |
| Production conditions | Hs control range | Hs=66±1 | | Hs=66±1 | | | | | | Hs=68±1 | |
| | Vulcanization conditions | 150°C -30 min | | 170°C -12 min | | | | | | 170°C -12 min | |
| Performance evaluation | Mooney viscosity | 103 | 100 | 102 | 104 | 102 | 101 | 100 | 98 | 104 | 100 |
| | (1) Elongation at break (normal temperature) target ≥ 98 | 101 | 100 | 101 | 106 | 101 | 101 | 100 | 101 | 108 | 100 |
| | (2) Elongation at break (100°C) target ≥ 100 | 102 | 100 | 120 | 126 | 121 | 115 | 100 | 100 | 103 | 100 |
| | (3) Abrasion resistance target ≥ 101 | 103 | 100 | 115 | 118 | 115 | 107 | 100 | 97 | 103 | 100 |
| | Combined performance (sum of (1) to (3)) | 306 | 300 | 336 | 350 | 337 | 323 | 300 | 298 | 314 | 300 |
| | | | Reference | | | | | Reference | | | Reference |

[Table 1] Cont.

| | | | Ex. | Comp. Ex. |
|---|---|---|---|---|
| Member | | | Clinch | |
| Tire type | | | | |
| | | | 5-1 | 5-1 |
| Blending amount (parts by mass) | Rubber component | NR | 30 | 30 |
| | | SBR | | |
| | | BR | 70 | 70 |
| | Filler | Carbon black 1 (N220) | | |
| | | Carbon black 2 (N330) | 65 | 65 |
| | | Silica | | |
| | | Silane coupling agent | | |
| | Resin | Rosin ester resin | | |
| | | Terpene styrene resin | | |
| | | α-methylstyrene resin | | |
| | | C5 resin | 4 | 4 |
| | Wax | Paraffin wax | 1.0 | 1.0 |
| | Commercial processing aid | Stearic acid | 2 | 2 |
| | Process oil | AH-24 | 5 | 5 |
| | | Rice oil | | |
| | Crosslinking activator | Zinc oxide | 3.0 | 3.0 |
| | Antioxidant | 6PPD | 3.0 | 3.0 |
| | | TMQ | | |
| | | γ-oryzanol | 0.100 | |
| | Vulcanizing agent | 5% oil-containing powdery sulfur | 2.22 | 2.22 |
| | Vulcanization accelerator | TBBS | 3.4 | 3.4 |
| | | DPG | | |
| Production conditions | | Hs control range | Hs=69±1 | |
| | | Vulcanization conditions | 170°C -12 min | |
| Performance evaluation | | Mooney viscosity | 103 | 100 |
| | | (1) Elongation at break (normal temperature) target ≥ 98 | 104 | 100 |
| | | (2) Elongation at break (100°C) target ≥ 100 | 109 | 100 |
| | | (3) Abrasion resistance target ≥ 101 | 103 | 100 |
| | | Combined performance (sum of (1) to (3)) | 316 | 300 |
| | | | | Reference |

Table 1 demonstrates that, in Examples in which a rubber component, carbon black and/or silica, sulfur and/or a sulfur-containing compound, and a ferulic acid ester compound are contained and the amount of the ferulic acid ester compound per 100 parts by mass of the rubber component is 0.01 to 10 parts by mass, abrasion resistance and tensile performance can be improved in a balanced manner while favorable processability (a high rubber viscosity, that is, indicating that viscosity reduction due to breakage of a polymer can be inhibited in the kneading step) is maintained. In particular, in the treads of tires for a passenger car, the tensile performance (100°C) and the abrasion resistance were significantly improved.

A rubber composition capable of improving abrasion resistance and tensile performance in a balanced manner and a pneumatic tire using the rubber composition are provided. The rubber composition contains a rubber component, carbon black and/or silica, sulfur and/or a sulfur-containing compound, and a ferulic acid ester compound, and an amount of the ferulic acid ester compound per 100 parts by mass of the rubber component is 0.01 to 10 parts by mass.

## Claims

**1.** A rubber composition containing a rubber component, carbon black and/or silica, sulfur and/or a sulfur-containing compound, and a ferulic acid ester compound, wherein

an amount of the ferulic acid ester compound per 100 parts by mass of the rubber component is 0.01 to 10 parts by mass,
**characterized in that**
an amount of rice oil per 100 parts by mass of the rubber component is 0 parts by mass.

**2.** The rubber composition according to claim 1, wherein an amount of ferulic acid ester compound 100 parts by mass of the rubber component is 0.01 to 1.0 parts by mass.

**3.** The rubber composition according to claim 1 or 2, further containing a p-phenylenediamine-based antioxidant.

**4.** The rubber composition according to any one of claims 1 to 3, further containing a rosin ester resin.

**5.** The rubber composition according to any one of claims 1 to 4, wherein the rubber composition is a rubber composition for a tire.

**6.** A pneumatic tire comprising a tire member produced using the rubber composition according to any one of claims 1 to 4.

## Patentansprüche

**1.** Kautschukzusammensetzung, die eine Kautschukkomponente, Ruß und/oder Siliciumdioxid, Schwefel und/oder eine schwefelhaltige Verbindung und eine Ferulasäureesterverbindung enthält, wobei

eine Menge der Ferulasäureesterverbindung pro 100 Masseteile der Kautschukkomponente 0,01 bis 10 Masseteile beträgt,
**dadurch gekennzeichnet, dass**
eine Menge an Reisöl pro 100 Masseteile der Kautschukkomponente 0 Masseteile ist.

**2.** Kautschukzusammensetzung nach Anspruch 1, wobei die Menge an Ferulasäureesterverbindung pro 100 Masseteile der Kautschukkomponente 0,01 bis 1,0 Masseteile ist.

**3.** Kautschukzusammensetzung nach Anspruch 1 oder 2, die zusätzlich ein Antioxidans auf p-Phenylendiaminbasis enthält.

**4.** Kautschukzusammensetzung nach einem der Ansprüche 1 bis 3, die zusätzlich ein Kolophoniumesterharz enthält.

**5.** Kautschukzusammensetzung nach einem der Ansprüche 1 bis 4, wobei die Kautschukzusammensetzung eine Kautschukzusammensetzung für einen Reifen ist.

**6.** Luftreifen, der ein Reifenelement umfasst, das unter Verwendung der Kautschukzusammensetzung nach einem der Ansprüche 1 bis 4 hergestellt wurde.

## Revendications

**1.** Composition de caoutchouc contenant un composant caoutchouc, du noir de carbone et/ou de la silice, du soufre et/ou un composé contenant du soufre, et un composé ester d'acide férulique, dans laquelle

une quantité de composé ester d'acide férulique pour 100 parties en masse du composant caoutchouc est comprise entre 0,01 et 10 parties en masse,
**caractérisée en ce que**
une quantité d'huile de riz pour 100 parties en masse du composant caoutchouc est de 0 partie en masse.

**2.** Composition de caoutchouc selon la revendication 1, dans laquelle la quantité de composé ester d'acide férulique pour 100 parties en masse du composant caoutchouc est comprise entre 0,01 et 1,0 partie en masse.

**3.** Composition de caoutchouc selon la revendication 1 ou 2, contenant en outre un antioxydant à base de p-phénylènediamine.

**4.** Composition de caoutchouc selon l'une quelconque des revendications 1 à 3, contenant en outre une résine d'ester de colophane.

**5.** Composition de caoutchouc selon l'une quelconque des revendications 1 à 4, dans laquelle la composition de caoutchouc est une composition de caoutchouc pour un pneu.

**6.** Pneumatique comprenant un élément de pneu produit en utilisant la composition de caoutchouc selon l'une quelconque des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012111888 A
- JP 2012149133 A
- JP 2012149132 A
- JP 2012122016 A
- EP 2740757 A1
- JP 2008075066 A